# EUROPEAN PATENT SPECIFICATION

(11) **EP 0 904 999 B1**
(45) Date of publication and mention of the grant of the patent: **07.04.2004**
(21) Application number: 98115627.6
(22) Date of filing: 19.08.1998
(51) Int. Cl.: B60S 1/60, B60S 1/48, B60S 1/52, B60Q 1/00, B62J 17/00, B62J 39/00

(54) **Headlamp cleaner**
Scheinwerferreinigungsvorrichtung
Dispositif de nettoyage de phare

(30) Priority: 26.09.1997 JP 26161897; 24.06.1998 JP 17723498
(43) Date of publication of application: 31.03.1999
(73) Proprietor: Honda Giken Kogyo Kabushiki Kaisha, Minato-ku, Tokyo (JP)
(72) Inventor: Kodaira, Shigeru, 4-1 Chuo 1-chome Wako-shi, Saitama (JP); Takeda, Kenichi, 4-1 Chuo 1-chome Wako-shi, Saitama (JP); Tabata, Hajime, 4-1 Chuo 1-chome Wako-shi, Saitama (JP)
(74) Representative: Liska, Horst, Dr.-Ing.

(56) References cited:
- DE-A- 4 435 941
- FR-A- 2 674 804
- GB-A- 807 507
- US-A- 4 285 470
- PATENT ABSTRACTS OF JAPAN vol. 008, no. 032 (M-275), 10 February 1984 (1984-02-10) & JP 58 188739 A (HONDA GIKEN KOGYO KK), 4 November 1983 (1983-11-04)
- PATENT ABSTRACTS OF JAPAN vol. 014, no. 113 (M-0944), 2 March 1990 (1990-03-02) & JP 01 314649 A (HONDA MOTOR CO LTD), 19 December 1989 (1989-12-19)
- PATENT ABSTRACTS OF JAPAN vol. 008, no. 148 (M-308), 11 July 1984 (1984-07-11) & JP 59 045252 A (JEKO KK), 14 March 1984 (1984-03-14)
- PATENT ABSTRACTS OF JAPAN vol. 013, no. 225 (M-830), 25 May 1989 (1989-05-25) & JP 01 041446 A (HONDA MOTOR CO LTD;OTHERS: 01), 13 February 1989 (1989-02-13)

## Description

This invention relates to a headlamp cleaner of a motorcycle.

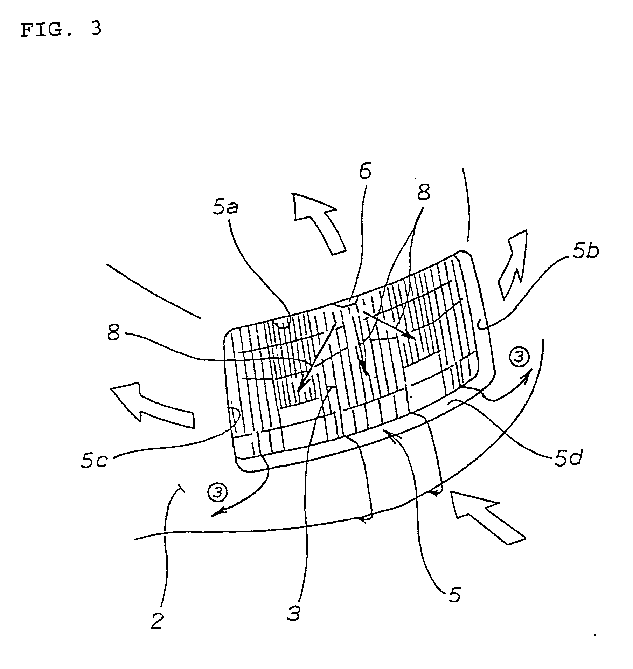

Recently, there has been an increasing demand for a headlamp cleaner for a motorcycle. A headlamp cleaner for a four-wheel vehicle where a cleaning agent is injected upward from a lower part of headlamps has been known, as disclosed in Japanese Utility Model Laid-Publication Sho. 53-22464 entitled "Headlamp Cleaner." Referring to Fig. 3 of the publication, the nozzle 10 for injecting the cleaning agent is arranged on the bumper 11 via the bracket 12. The headlamp lens 13 is cleaned by the cleaning agent injected via the nozzle 10.

The following describes how a headlamp of a motorcycle is cleaned using a headlamp cleaner which is substantially identical to that in the foregoing publication, without any modification.

Fig. 18 of the accompanying drawings shows the operation and problem of a case where the foregoing headlamp cleaner is applied to a motorcycle, specifically showing a side view of the running motorcycle and the posture of a rider seated thereon.

The motorcycle 100 comprises a body frame 101, a front fork 102 positioned in front of the body frame 101 and being freely steerable, a front wheel 103 attached to the front fork 102, a fuel tank 104, a seat 105, engine 106, and a rear wheel 107 at the rear part of the body frame 101. The fuel tank 104, seat 105 and engine 106 are positioned at the center of the body frame 101. Reference numeral 108 denotes a front cover, 109 denotes a headlamp, and 110 denotes a headlamp cleaner arranged on the front cover 108.

The headlamp cleaner 100 is useful for cleaning a lens of the headlamp 109 of the motorcycle in operation.

However, when a cleaning agent 111 is injected upward from the headlamp cleaner 110 as shown by ① on the running motorcycle, it disperses in the shape of droplets (called the "cleaning agent 112"), and is pushed further upward to opposite sides of the headlamp 109, by wind blowing as shown by large white arrows. Refer to ② in Fig. 8. Sometimes, the cleaning agent 112 may reach a rider 113 depending upon surrounding conditions. Further, it is conceivable that the cleaning agent may disperse to reacn a windscreen due to wind caused by the running motorcycle.

FR-A-2 674 804 discloses a headlamp cleaner in accordance with the preamble of claim 1.

The cleaning agent injected from the cleaning nozzle flows downward on the headlamp lens against upward wind caused by the running motorcycle. Only a very small amount of cleaning agent is pushed backward by wind, which is effective in minimizing the cleaning agent that disperses.

It is an object of the invention to provide a headlamp cleaner for a motorcycle which can further reduce dispersion of a cleaning agent toward a rider.

In accordance with a first aspect of the invention as defined in claim 1, the front cover includes the guides for guiding the cleaning agent out of the frame. This is effective in guiding the cleaning agent downward along the opposite sides of the frame, and the guides, and minimizing the cleaning agent dispersing near the opposite sides of the frame.
The front cover has guides introducing the cleaning agent from an area enclosed by the frame to a lower area outside the frame.
The used cleaning agent is discharged via the guides integral with the front cover.

Preferably, the frame includes upper, left and right portions guiding the cleaning agent folded to a lens surface, and a non folded lower portion quickly discharging the used cleaning agent onto the front cover downward out of the frame.

The frame without a folded lower portion enables quick downward discharging of the used cleaning agent from the area enclosed by the frame. The frame defined in claim 2 has the folded upper, left and right portions, and has a non-folded lower portion, which is effective in discharging the used cleaning agent downward out of the frame, and in preventing the dispersion of the used cleaning agent from the lower portion of the frame.

Therefore, the cleaning agent is unlikely to be dispersed toward the rider.

The front cover extends over the front part of the vehicle, is provided with an opening for the lens of the headlamp, and has a peripheral edge thereof folded rearward to function as the frame.
The frame for attaching the cleaning nozzle is constituted using a part of the front cover where the headlamp is attached.

The vehicle has its front part covered by the front cover which has the opening for the headlamp lens. The upper, left and right edges of the opening are folded rearward in order to form the frame. When the cleaning nozzle is attached to the frame, it becomes integral with the front cover, and does not extensively project therefrom. This is effective in improving the external appearance of the motorcycle.

The frame guides the cleaning agent downward, so that the cleaning agent is unlikely to disperse from the periphery of the lens.

The invention will be described with reference to embodiments shown in drawing figures.
Fig. 1 is a perspective view of a generic headlamp cleaner not covered by claim 1 for comparison;
Fig. 2 is a perspective view of the headlamp cleaner of Fig. 1;
Fig. 3 shows the operation of the headlamp cleaner of Fig. 1;
Fig. 4 is a perspective view of a headlamp cleaner in a first embodiment of the invention;
Fig. 5 shows the operation of the headlamp cleaner in the first embodiment of the invention;
Fig. 6 is a perspective view of the headlamp cleaner in a second embodiment of the invention;
Fig. 7 shows the operation of the headlamp cleaner in the second embodiment of the invention; and
Fig. 8 is a perspective view of a motorcycle to which a conventional headlamp cleaner is applied without any modification, showing the operation and problem of the headlamp cleaner.

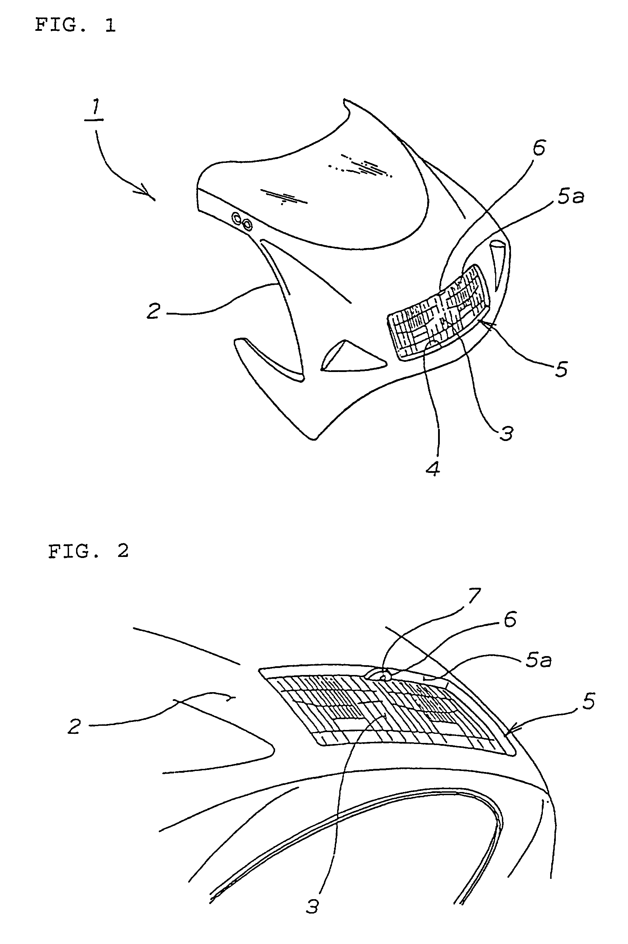

Fig. 1 is a perspective view of a generic headlamp cleaner.

The headlamp cleaner 1 comprises: a frame 5 that is provided on a front cover 2 using an opening 4 for a headlamp lens 3, and has upper, left and right portions thereof folded rearward; and a cleaning nozzle 6 attached to the upper portion 5a of the frame 5 such that it injects the cleaning agent downward in order to clean the lens 3. In other words, the lens 3 is enclosed by the frame 5 formed by the front cover 2.

It is also possible to enclose the headlamp by the frame without using a front cover depending upon a type of a motorcycle.

Fig. 2 is. another perspective view of the foregoing headlamp cleaner, viewed obliquely upward from underneath. The cleaning nozzle 6 is attached to the upper portion 5a of the frame 5. Reference numeral 7 denotes holes formed on the cleaning nozzle 6. The nozzle 6 preferably has a plurality of holes 7. Further, a plurality of nozzles 6 may be used.

The operation of this headlamp cleaner will be described hereinafter.

Fig. 3 shows how the headlamp cleaner operates, being an enlarged view of Fig. 1. A cleaning agent 8 is injected in downward jets 8... onto the lens 3 from the cleaning nozzle 6, spreads over the lens 3 enclosed by the frame 5, and cleans the lens 3. Since the cleaning agent 8 is injected downward against upward wind caused by the running motorcycle, it is unlikely to disperse upwards. Further, the opposite siae portions 5b and 5c of the frame 5 smoothly guide the spreading cleaning agent 8 downward. It is not probable that the cleaning agent 8 will go over these portions 5b and 5c. After use, the cleaning agent 8 passes over a non-folded lower portion 5d of the frame 5, and falls down via the surface of the front cover 2. In this state, some of the cleaning agent 8 falls down and is led backward in left and right sides shown by ③, by wind shown by large white arrows. Here, the left and right sides denote the opposite sides of the rider seated on the motorcycle.

Alternatively, the used cleaning agent may be discharged downward via a slit formed at the lower part of the frame 5, without passing via the front cover 2.

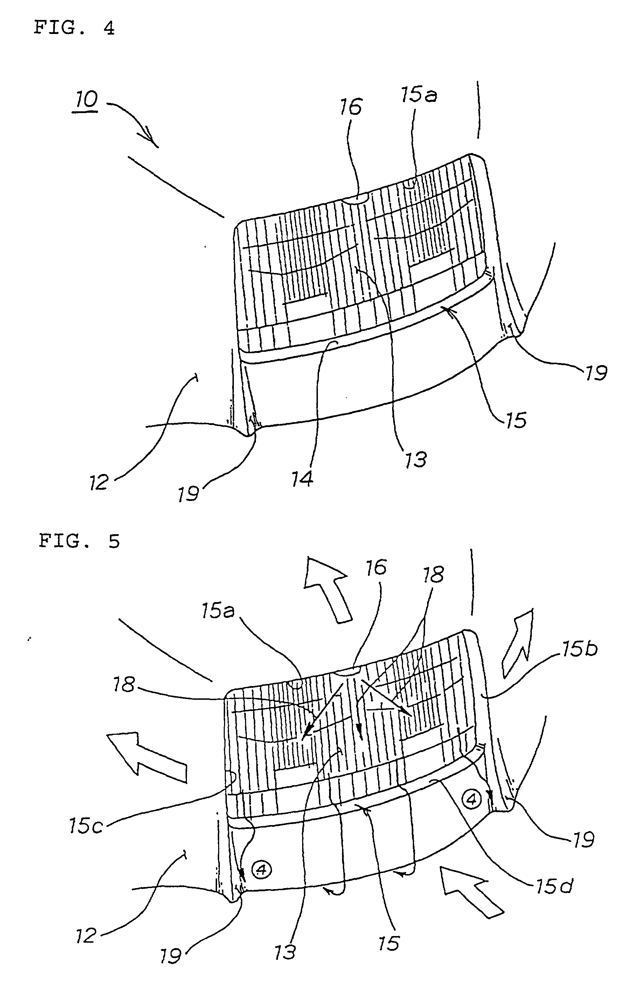

Embodiments of the headlamp cleaner in accordance with the invention will be described with reference to Fig. 4 to 7.

Fig. 4 is a perspective view of a headlamp cleaner in a first embodiment of the invention.

The headlamp cleaner 10 comprises: a frame 15 that is provided on a front cover 12 using an opening 14 for a headlamp lens 13, and has upper, left and right portions folded rearward; and a cleaning nozzle 16 attached to the upper portion 15a of the frame in order to inject a cleaning agent downward in order to clean the lens 13. The front cover 12 is provided with a pair of guides 19, 19 for guiding the cleaning agent downward over the lower part of the frame 15. In other words, the lens 13 is enclosed by the frame 15 formed by the front cover 12.

The operation of the first embodiment will be described hereinafter.

A cleaning agent 18 is injected in downward jets 18... onto the lens 13 from the cleaning nozzle 16, and spreads over the lens 13. The cleaning agent 18 is smoothly guided along left and right portions 15b and 15c of the frame 15, and smoothly flows downward without going over the portions 15b and 15c.

Further, the guides 19, 19 on the front cover 12 are effective in guiding the used cleaning agent 18 downward from the frame 15 without dispersing to the left and right. In this state, even if some of the used cleaning agent 18 tends to flow rearward due to wind shown by large white arrows, it is effectively guided downward by the guides 19, 19, as shown by ④.

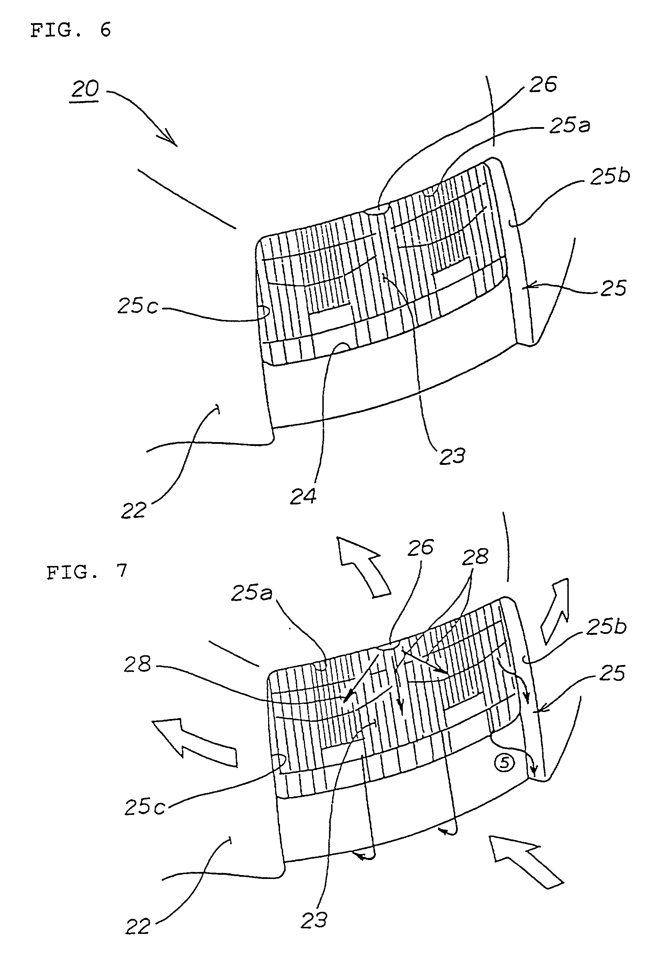

Fig. 6 is a perspective view of a headlamp cleaner in a second embodiment of the invention.

The headlamp cleaner 20 comprises a frame 25 that is provided on a front cover 22 of the motorcycle using an opening 24 for a headlamp lens 23, and has upper, left and right portions 25a, 25b and 25c thereof folded rearward; and a cleaning nozzle 26 attached to the upper portion 25a such that it injects the cleaning agent downward. In other words, the headlamp lens 23 is enclosed by the upper, left and right portions 25a, 25b and 25c of the frame 25 formed on the front cover 22.

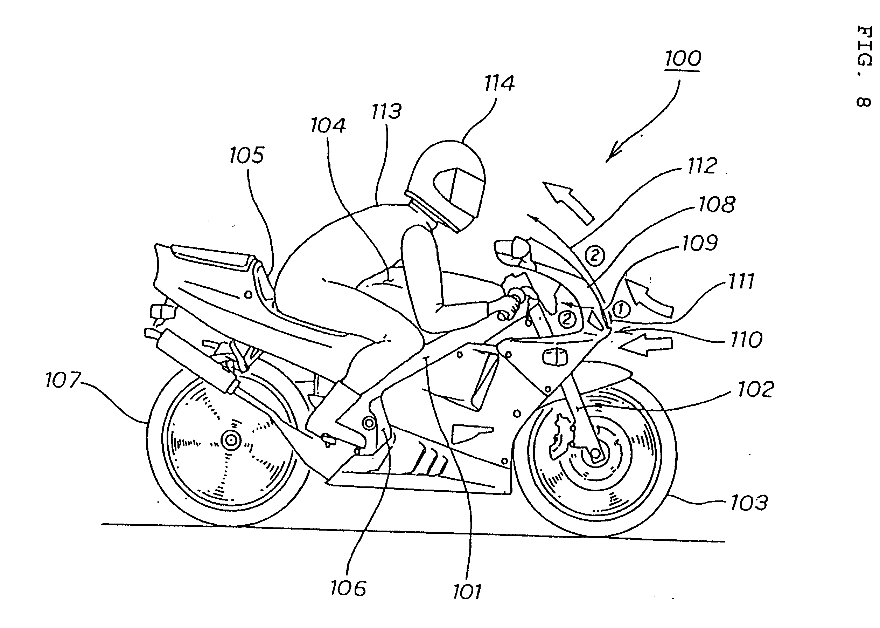

The following describes the operation of the headlamp cleaner in the second embodiment with reference to Fig. 7.

The cleaning agent 28 is injected in downward jets 28... from the cleaning nozzle 26 onto the headlamp lens 23, spreading all over the headlamp lens 23. The left and right portions 25b and 25c smoothly guide the cleaning agent 28 downward, which does not go over the portions 25b and 25c.

The frame 25 has a non-folded lower portion, so that the used cleaning agent is quickly discharged out of the frame 25.

Further, the opposite side portions 25b and 25c reach the lower edge of the front cover 22, thereby guiding the used cleaning agent 28 downward toward their lower parts as shown by ⑤.

A headlamp cleaner 1 comprises: a frame 5 enclosing a headlamp lens; a cleaning nozzle 6 attached to an upper half of the frame 5 such that it injects a cleaning agent downward; a vehicle state detecting unit, a vehicle state determining unit for determining whether or not the vehicle state meets the predetermined conditions; and a cleaning controller for determining whether or not cleaning is to be executed, on the basis of the result determined by the vehicle state determining unit.

The cleaning agent is injected downward from the cleaning nozzle and flows on the lens against wind blowing upward during running of the motorcycle. Therefore, it is possible to minimize an amount of the cleaning agent scattered by the wind. Further, the headlamp cleaner includes the vehicle state detecting unit, vehicle state determining unit, and cleaning controller. No cleaning agent will be injected when the vehicle is detected to be in the state where the cleaning agent tends to disperse. The cleaning agent injected downward is thus unlikely to disperse toward the rider.

## Claims

1. A headlamp cleaner in combination with a front cover of a motorcycle for cleaning a lens (3) of a headlamp at the front part of the motorcycle, wherein said lens is enclosed by a frame (5), and a cleaning nozzle (6) is attached to an upper half of said frame in order to inject a cleaning agent downward, wherein the front cover (2) is provided with an opening for the lens (3) of the headlamp, and has a peripheral edge thereof folded rearward to form said frame, **characterized in that** the front cover (2) has guides (19, 19) leading the cleaning agent from an area enclosed by said frame (5) to a lower area outside said frame.

2. The headlamp cleaner in combination with the front cover of claim 1, **characterized in that** said frame (25) includes folded upper, left and right portions (25a, b, c) and has a non-folded lower portion which guides the cleaning agent to a lens surface and discharges the cleaning agent onto the front cover (2) downward out of said frame.

## Patentansprüche

1. Scheinwerferreinigungsvorrichtung in Kombination mit einer Frontabdeckung eines Kraftrads zum Reinigen einer Linse (3) eines Scheinwerfers an dem Frontteil des Kraftrads, worin die Linse durch einen Rahmen (5) umschlossen ist und eine Reinigungsdüse (6) an einer oberen Hälfte des Rahmens angebracht ist, um ein Reinigungsmittel abwärts zu spritzen, worin die Frontabdeckung (2) mit einer Öffnung für die Linse (3) des Scheinwerfers versehen ist und ihr Umfangsrand nach hinten geknickt ist, um den Rahmen zu bilden,
**dadurch gekennzeichnet,**
**dass** die Frontabdeckung (2) Führungen (19, 19) aufweist, die das Reinigungsmittel von einem durch den Rahmen (5) umschlossenen Bereich zu einem unteren Bereich außerhalb des Rahmens führen.

2. Scheinwerferreinigungsvorrichtung in Kombination mit der Frontabdeckung nach Anspruch 1, **dadurch gekennzeichnet, dass** der Rahmen (25) geknickte obere linke und rechte Abschnitte (25a, b, c) enthält und einen nicht geknickten unteren Abschnitt aufweist, der das Reinigungsmittel zu einer Linsenoberfläche führt und das Reinigungsmittel auf die Frontabdeckung (2) nach unten aus dem Rahmen heraus abführt.

## Revendications

1. Dispositif de nettoyage de phare combiné à un capot avant d'une motocyclette, destiné à nettoyer une lentille (3) d'un phare au niveau de la partie avant de la motocyclette, dans lequel ladite lentille est protégée par un cadre (5) et une buse de nettoyage (6) est fixée à une moitié supérieure dudit cadre pour injecter un agent nettoyant vers le bas, dans lequel le capot avant (2) est pourvu d'une ouverture pour la lentille (3) du phare, et comprend un bord périphérique de celui-ci courbé vers l'arrière pour former ledit cadre, **caractérisé en ce que** le capot avant (2) comprend des guides (19, 19) menant l'agent nettoyant depuis une zone protégée par ledit cadre (5) vers une zone inférieure à l'extérieur dudit cadre.

2. Dispositif de nettoyage de phare combiné à un capot avant selon la revendication 1, **caractérisé en ce que** ledit cadre (25) comprend des parties supérieure, gauche et droite courbées (25a, b, c) et comprend une partie inférieure non courbée qui guide l'agent nettoyant vers une surface de lentille et évacue l'agent nettoyant sur le capot avant (2) vers le bas hors dudit cadre.
